# EUROPEAN PATENT SPECIFICATION

(11) **EP 0 592 551 B1**
(45) Date of publication and mention of the grant of the patent: **03.01.1996**
(21) Application number: 92914774.2
(22) Date of filing: 10.06.1992
(51) Int. Cl.: C23C 4/10, D21F 3/08, G06F 13/12

(54) **PRESS ROLL FOR A PAPERMACHINE**
Presswalze für eine Papiermaschine
CYLINDRE COMPRESSEUR POUR UN MACHINE DE FABRICATION DE PAPIER

(30) Priority: 01.07.1991 US 723994
(43) Date of publication of application: 20.04.1994
(73) Proprietor: BELOIT TECHNOLOGIES, INC., Wilmington, DE 19801-1622 (US)
(72) Inventor: McCARTEN, Paul, Clarks Summit, PA 18411 (US)
(74) Representative: Schmitz, Jean-Marie
(86) International application number: US9204918
(87) International publication number: WO9301326

(56) References cited:
- EP-A- 0 481 321
- US-A- 4 704 776
- US-A- 4 748 736
- US-A- 4 796 342
- US-A- 4 856 161
- US-A- 4 951 392

## Description

### BACKGROUND OF THE INVENTION

### FIELD OF THE INVENTION

The present invention relates to a press roll and a composition of matter for coating the press roll. More particularly, the present invention relates to a composition for coating a press roll which is a replacement for a natural granite press roll.

### INFORMATION DISCLOSURE STATEMENT

In the papermaking art, as the speed of rotation of typical natural granite press rolls increases, there is an ever-present danger cf such press rolls fracturing and fragmenting.

A typical prior art natural granite press roll may operate in the region of 17.8 m/s (3,500 feet per minute) and such press roll may weigh in the region of 100t (100 tons). It is evident that the fragmentation of such a roll can pose a serious operational hazard. In fact, several fatalities have resulted from the aforementioned break-up of natural granite press rolls.

Consequently, particularly in Europe, the use of natural granite press rolls has been outlawed.

In US-A-4 704 776 there is disclosed a papermachine press roll comprising a metal core and a ceramic layer formed by coating the metal core with a finely divided metallic oxide such as mullite (Al₂O₃-SiO₂) by a plasma metal spray.

Therefore, it is a primary objective of the present invention to provide a composition of matter for coating a press roll which overcomes the aforementioned inadequacies of the prior art natural granite press rolls and provides a significant contribution to the art of pressing water from a formed web.

Another cbject of the present invention is the provision of a composition of matter for coating a press roll, such composition including an aluminosilicate and an alkaline-earth metal oxide.

Another object of the present invention is the provision of a press roll for a press section of a papermachine for pressing water from a web extending past the press roll, the press roll including a tubular metal shell defining a cylindrical outer surface and a roll cover sprayed onto the outer surface, the roll cover including an aluminosilicate and an alkaline-earth metal oxide.

Another object of the present invention is the provision of a press roll in which the roll cover is either thermally or plasma sprayed onto the outer surface.

Other objects and advantages of the present invention will be readily apparent to those skilled in the art by a consideration of the detailed description contained hereinafter taken in conjunction with the annexed drawings.

To achieve this, the press roll of the present invention comprises a roll cover consisting of a composition as claimed in claim 1. The composition includes an aluminosilicate within the range 95 to 99.9 percent by weight and alkaline-earth metal oxide within the range .1 to 5 percent by weight.

Accordingly, the present invention provides a synthetic or substitute granite surface on a tubular metal shell in order to provide a press roll.

Not only does the substitute granite roll of the present invention avoid the aforementioned potentially hazardous conditions associtated with the prior art natural granite press rolls but also affords a considerable cost saving, particularly in view of the rapid depletion of natural sources of natural granite around the world.

In the present invention, the press roll for a press section of a papermachine presses water from. a web extending past the press roll. The press roll includes a tubular metal shell which defines a cylindrical outer surface. A roll cover is sprayed onto the outer surface. The roll cover includes the aluminosilicate and an alkaline-earth metal oxide.

In one embodiment of the present invention, the roll cover is thermally sprayed onto the outer surface, and in another embodiment of the present invention, the roll cover is plasma sprayed onto the outer surface.

Many modifications and variations of the present invention will be readily apparent to those skilled in the art by a consideration of the detailed description contained hereinafter taken in conjunction with the annexed drawings. However, such modifications and variations fall within the present invention as defined by the appended claims.

### BRIEF DESCRIPTION OF THE DRAWINGS

Figure 1 is a side-elevational view of a typical prior art natural granite press roll;
Figure 2 is a side-elevational view, partially in section, of a press roll according to the present invention showing a roll cover as a composition of matter applied to the outer surface of a tubular metal shell.

Similar reference characters refer to similar parts throughout the various views of the drawings.

### DETAILED DESCRIPTION OF THE DRAWINGS

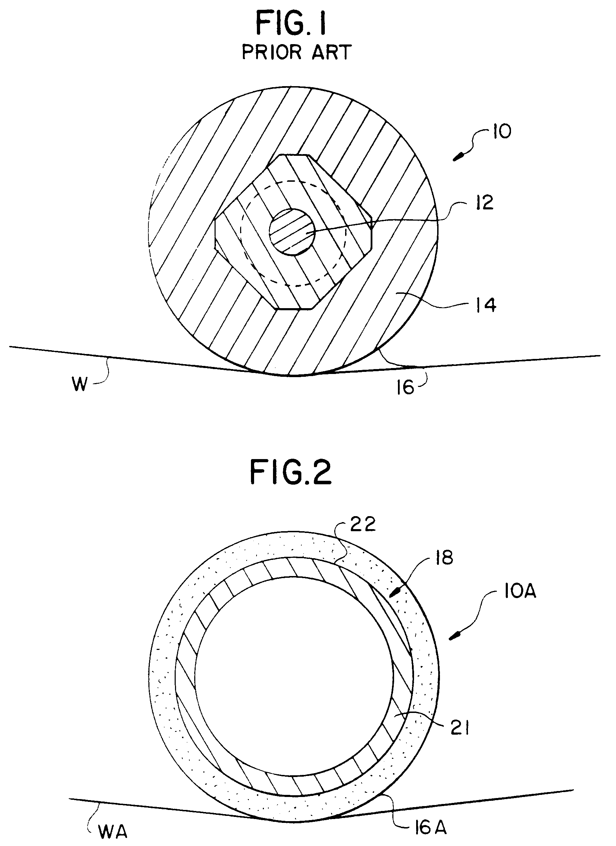

Figure 1 is a side-elevational view of a typical prior art nacural granite press roll generally designated **10**. The press roll **10** includes an axle **12** rotatably secured within journal bearings (not shown). A sleeve **14** of natural granite is rigidly secured to the axle **12** such that the sleeve **14** rotates with the axle **12**. The sleeve **14** defines an outer cylindrical surface **16** which comes into physical contact with the web **W**.

Figure 2 is a side-elevational view, partially in section, showing a press roll **10A** according to the present invention. A composition of matter, generally designated **18**, coats the press roll shell **21**. The composition defines a roll surface **16A** for contacting a web **WA** of paper extending past the press roll **10A**. The press roll **10A** is a replacement for a natural granite press roll of the type shown in Figure 1. The composition includes an aluminosilicate and an alkaline-earth metal oxide.

The composition **18** is plasma sprayed onto the roll shell **21** such that roll surface **16A** simulates a granite surface of a granite press roll.

The composition **18** includes aluminosilicate within the range 95 to 99.9 percent by weight and alkaline-earth metal oxide within the range .1 to 5 percent by weight.

More particularly, Figure 2 shows the press roll **10A** for a press section of a papermachine for pressing water from a web **WA** extending past the press roll **10A**. The press roll **10A** includes a tubular metal shell **21** which defines a cylindrical outer surface **22**. A roll cover, generally designated **18**, is sprayed onto the outer surface **22** of the shell **21**. The roll cover **18** includes aluminosilicate and an alkaline-earth metal oxide.

In one embodiment of the present invention, the roll cover is thermally sprayed onto the outer surface **22**, and in another embodiment of the present invention, the roll cover **18** is plasma sprayed onto the outer surface **22**.

The present invention provides a relatively low cost synthetic granite press roll which overcomes the aforementioned hazards associated with the prior art natural granite press rolls.

Additionally, the synthetic granite roll of the present invention overcomes the problem caused by the scarcity of relatively massive blocks of natural granite suitable for fabrication into natural granite press rolls.

## Claims

1. A press roll (10A) for a press section of a papermachine for pressing water from a web (WA) extending past said press roll (10A), said press roll (10A) comprising:
a tubular metal shell (21) defining a cylindrical outer surface (22);
a roll cover (18) sprayed onto said outer surface (22), said roll cover (18) consisting of:
an aluminosilicate within the range 95 to 99.9 percent by weight; and
alkaline-earth metal oxide within the range 0.1 to 5 percent by weight.

2. A press roll (10A) as set forth in claim 1, wherein said roll cover (18) is thermally sprayed onto said outer surface (22).

3. A press roll (10A) as set-forth in claim 1, wherein said roll cover (18) is plasma sprayed onto said outer surface (22).

## Patentansprüche

1. Druckwalze (10A) für eine Pressenpartie einer Papiermaschine, um Wasser aus einer Papierbahn (WA) zu pressen, die sich an der Druckwalze (10A) vorbei erstreckt, wobei die Druckwalze (10A) umfasst:
eine rohrförmige Metallhülle (21), die eine zylindrische äussere Oberfläche (22) definiert;
einen Überzug (18) der Walze, der auf die äussere Oberfläche (22) gespritzt ist, wobei der Überzug (18) der Walze besteht aus:
einem Aluminiumsilikat im Bereich von 95 bis 99.9 Gewichtsprozent; und
erdalkalischem Metalloxid im Bereich von 0.1 bis 5 Gewichtsprozent.

2. Druckwalze (10A) nach Anspruch 1, bei welcher der Überzug (18) der Walze thermisch auf die äussere Oberfläche (22) gespritzt wird.

3. Druckwalze (10A) nach Anspruch 1, bei welcher der Überzug (18) der Walze mit einem Plasmaspritzverfahren auf die äussere Oberfläche (22) gespritzt wird.

## Revendications

1. Un cylindre compresseur (10A) pour une section de presse d'une machine à fabriquer du papier pour presser l'eau d'une bande (WA) s'étendant au-delà dudit cylindre compresseur (10A), ledit cylindre compresseur (10A) comprenant:
une enveloppe métallique tubulaire (21) définissant une surface externe cylindrique (22);
un revêtement de cylindre (18) pulvérisé sur ladite surface externe (22), ledit revêtement du cylindre (18) consistant en:
un aluminosilicate dans la gamme de 95 à 99,9 pour-cent en poids; et
un oxyde d'un métal alcalino-terreux dans la gamme de 0,1 à 5 pour-cent en poids.

2. Un cylindre compresseur (10A), tel qu'exposé à la revendication 1, dans lequel ledit revêtement du cylindre (18) est pulvérisé à chaud sur ladite surface externe (22).

3. Un cylindre compresseur (10A), tel qu'exposé à la revendication 1, dans lequel ledit revêtement du cylindre (18) est pulvérisé au plasma sur ladite surface externe (22).
